# FASCICULE DE BREVET EUROPEEN

(11) **EP 1 608 893 B1**
(45) Date de publication et mention de la délivrance du brevet: **10.10.2007**
(21) Numéro de dépôt: 04720903.6
(22) Date de dépôt: 16.03.2004
(51) Int. Cl.: F16H 55/36

(54) **POULIE, DISPOSITIF DE DETECTION COMPRENANT UNE TELLE POULIE, ET MOTEUR A COMBUSTION INTERNE EQUIPE D'UN TEL DISPOSITIF**
RIEMENSCHEIBE, DETEKTIONSVORRICHTUNG MIT EINER DERARTIGEN RIEMENSCHEIBE UND BRENNKRAFTMASCHINE MIT EINER SOLCHEN VORRICHTUNG
PULLEY, DETECTION DEVICE COMPRISING ONE SUCH PULLEY, AND INTERNAL COMBUSTION ENGINE PROVIDED WITH ONE SUCH DEVICE

(30) Priorité: 01.04.2003 FR 0304038
(43) Date de publication de la demande: 28.12.2005
(73) Titulaire: Aktiebolaget SKF, 415 50 Göteborg (SE)
(72) Inventeur: MESSAGE, Olivier, F-37000 Tours (FR); DESCOMBES, Michel, F-78000 Versailles (FR)
(74) Mandataire: Casalonga, Axel
(86) Numéro de dépôt international: PCT/FR2004/000641
(87) Numéro de publication internationale: WO 2004/094873

(56) Documents cités:
- EP-A- 0 241 808
- US-A- 5 674 011
- PATENT ABSTRACTS OF JAPAN vol. 1997, no. 02, 28 février 1997 (1997-02-28) & JP 08 261287 A (NOK MEGURASUTIKKU KK), 8 octobre 1996 (1996-10-08)
- PATENT ABSTRACTS OF JAPAN vol. 2000, no. 01, 31 janvier 2000 (2000-01-31) & JP 11 281659 A (UCHIYAMA MFG CORP), 15 octobre 1999 (1999-10-15)
- PATENT ABSTRACTS OF JAPAN vol. 1998, no. 06, 30 avril 1998 (1998-04-30) & JP 10 048230 A (KOYO SEIKO CO LTD), 20 février 1998 (1998-02-20)

## Description

La présente invention concerne une poulie, prévue notamment pour une transmission de couple à partir d'un vilebrequin d'un moteur à combustion interne, ainsi qu'un dispositif de détection comprenant une telle poulie, et un moteur à combustion interne équipé d'un tel dispositif.

Les moteurs à combustion interne, et notamment les moteurs à allumage commandé, sont généralement prévus avec des dispositifs de détection de la position angulaire d'un vilebrequin du moteur afin de synchroniser la commande de bougies d'allumage avec la position angulaire du vilebrequin, à laquelle correspond la position des différents pistons dans les différents cylindres du moteur à combustion interne.

Par ailleurs, des poulies accouplées au vilebrequin sont utilisées pour la transmission d'une partie du couple du moteur vers des organes annexes, tels qu'un alternateur, une pompe de climatisation, ou encore une pompe de direction assistée. Pour amortir des acyclismes du vilebrequin, de telles poulies sont généralement prévues avec un élément amortisseur sous la forme d'un corps élastique prévue entre un moyeu et une jante. De telles poulies sont utilisées pour la détection de la position angulaire du vilebrequin. Le document JP8-261287 consideré comme étant l'état de l'art le plus proche, décrit un amortisseur avec une partie détectée par un capteur, cette partie en métal étant disposée dans une rainure du moyeu.

On connaît, par le document EP -A2- 0 241 808, une poulie comprenant un moyeu rigide et une jante extérieure reliés par un corps élastique, la jante étant munie d'une gorge à profil en V pour le passage d'une courroie. La jante extérieure est en outre munie sur une paroi périphérique de dents formant codeur pour la détection de la position angulaire de la poulie, et donc d'un vilebrequin.

Néanmoins, une telle poulie présente l'inconvénient d'être encombrante, ce qui rend plus compliquée son intégration dans un bloc moteur. Par ailleurs, la fabrication d'une telle poulie munie d'une jante extérieure profilée avec une gorge et une couronne de dents est complexe et coûteuse.

La présente invention a pour objet, comme revendiqué dans la revendication indépendante 1, une poulie adaptée pour une transmission de couple à partir d'un vilebrequin, et munie d'au moins un élément codeur pour la détection de paramètres de rotation de la poulie, tout en préservant la compacité et la simplicité de la poulie.

La présente invention a également pour objet une poulie munie d'au moins un élément codeur qui soit de fabrication simple et peu coûteuse.

Une telle poulie comprend un moyeu, une jante extérieure et un élément amortisseur intermédiaire disposé radialement entre le moyeu et la jante extérieure. Selon un aspect de l'invention, la poulie comprend un élément codeur prévu pour coopérer avec un capteur, ledit élément codeur étant disposé sensiblement dans le prolongement axial de l'élément amortisseur intermédiaire.

L'élément codeur disposé dans le prolongement axial d'un élément amortisseur intermédiaire préserve la compacité radiale de la poulie. Il est possible de prévoir un élément codeur avec une zone active annulaire située dans le prolongement axial de l'élément amortisseur. L'élément codeur peut en outre être disposé axialement à l'intérieur de l'espace compris entre la jante et le moyeu, ou à l'extérieur de l'espace compris entre la jante et le moyeu.

Dans un mode de réalisation, le moyeu présente une longueur axiale supérieure à celle d'un alésage de la jante, ce qui permet de former une portée cylindrique adaptée pour la fixation d'un élément codeur dans le prolongement axial de l'élément intermédiaire.

Avantageusement, l'élément amortisseur et l'élément codeur sont formés à partir d'un même matériau magnétisable, l'élément codeur étant obtenu par magnétisation dudit matériau. On pourra utiliser dans ce cas, en coopération avec l'élément codeur, un capteur magnétique à effet Hall.

Dans un mode de réalisation, l'élément codeur est disposé sur le moyeu à distance axiale de l'élément amortisseur.

Dans un mode de réalisation, la poulie comprend un support rigide emmanché sur le moyeu dans le prolongement de l'élément amortisseur, l'élément codeur étant fixé sur le support.

Dans un mode de réalisation, l'élément codeur est formé sur une partie d'un seul tenant avec l'élément amortisseur, ladite partie l'élément amortisseur pouvant par exemple être une surface radiale, par exemple une surface frontale, ou une surface cylindrique, par exemple une portée cylindrique dégagée d'une portion annulaire.

De préférence, l'élément amortisseur est magnétisé de façon à obtenir une succession circonférentielle de zones de polarités différentes, avec éventuellement et de façon avantageuse, une zone d'indexation angulaire, par exemple sous la forme d'une zone plus étendue circonférentiellement.

Avantageusement, on forme l'élément codeur sur une portion de l'élément amortisseur qui est au moins en partie découplée d'une partie principale de l'élément amortisseur afin de diminuer une sensibilité aux déformations dues aux contraintes de torsion et aux contraintes radiales subies par l'élément amortisseur du fait d'éventuels acyclismes.

Pour ce faire, l'élément amortisseur peut comprendre une portion principale interposée entre la jante extérieure et le moyeu, ladite portion principale étant prolongée à une extrémité par une portion axiale annulaire faisant saillie de l'espace compris radialement entre le moyeu et la jante, ladite portion axiale annulaire présentant au moins une surface magnétisée au moins en partie. La portion axiale, qui n'est pas directement interposée entre le moyeu et la jante, subit des déformations mais avec une amplitude moindre.

Pour améliorer le découplage, on pourra prévoir une portion axiale annulaire plus mince que la portion principale, par exemple s'étendant à partir d'une zone de moindre diamètre de la portion principale.

L'invention concerne également, comme revendiqué dans la revendication indépendante 12, un dispositif de détection comprenant un capteur et une poulie, selon un aspect de l'invention.

L'invention concerne encore, comme revendiqué dans la revendication indépendante 13, un moteur à combustion interne comprenant un capteur et une poulie selon un aspect de l'invention, ladite poulie étant disposée sur le vilebrequin du moteur.

La présente invention et ses avantages seront mieux compris à l'étude de la description détaillée de modes de réalisation pris à titre d'exemples nullement limitatifs et illustrés par les figures annexées, sur lesquelles :
- la figure 1 est une vue en coupe axiale d'une poulie selon premier mode de réalisation, disposée sur un vilebrequin d'un moteur ;
- la figure 2 est une vue en élévation de face de la poulie selon la figure 1 ;
- la figure 3 est une demi-vue en coupe d'une poulie selon un second mode de réalisation, disposée sur un vilebrequin d'un moteur ;
- la figure 4 est une demi-vue en coupe axiale d'une poulie selon un troisième mode de réalisation, disposée sur un vilebrequin d'un moteur ;
- la figure 5 est une demi-vue en coupe d'une poulie selon un quatrième mode de réalisation, disposée sur un vilebrequin d'un moteur ; et
- la figure 6 est une demi-vue en coupe axiale d'une poulie selon un cinquième mode de réalisation, disposée sur un vilebrequin d'un moteur.

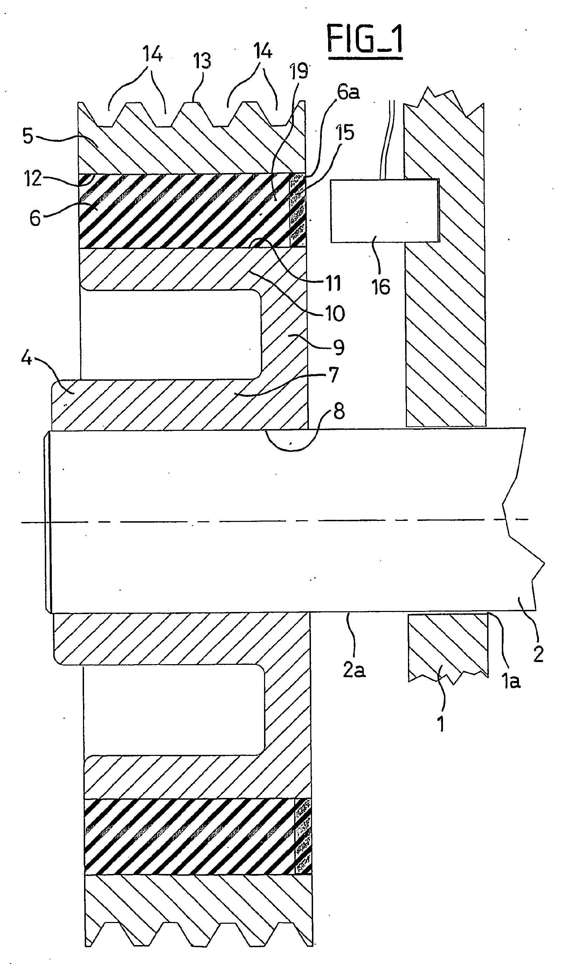

Sur la figure 1, un moteur à combustion interne, représenté partiellement et de façon schématique, comprend un carter 1 muni d'un trou la à travers lequel passe l'extrémité d'un vilebrequin 2 s'étendant en saillie à l'extérieur du carter 1, i.e. du côté gauche sur la figure 1. Une poulie de distribution référencée 3 dans son ensemble, est fixée sur une surface extérieure cylindrique 2a de l'extrémité en saillie du vilebrequin 2.

La poulie 3 comprend un moyeu central 4, une jante extérieure 5 coaxiale au moyeu 4 et entourant ce dernier, et un élément amortisseur intermédiaire 6 disposé radialement entre le moyeu central 4 et la jante extérieure 5.

Le moyeu 4 comprend un manchon intérieur 7 muni d'un alésage 8 emmanché sur le vilebrequin 2, un flasque 9 s'étendant radialement vers l'extérieur à partir de l'extrémité du manchon 7 située du côté du carter 1, et une portion tubulaire extérieure 10 s'étendant axialement à partir de la zone de plus grand diamètre du flasque 9 du côté du manchon 7. La portion tubulaire extérieure 10 est longueur axiale inférieure à celle du manchon 7, et présente une surface cylindrique extérieure 11.

La jante extérieure 5 présente un alésage 12, et une surface extérieure 13 munie de gorges annulaires 14 à profil trapézoïdal isocèle, ici au nombre de quatre. La jante extérieure 5 présente une longueur axiale sensiblement identique à celle de la portion tubulaire extérieure 10 du moyeu 4, et la jante 5 est disposée axialement de façon que les extrémités axiales de la jante 5 soient alignées radialement avec les extrémités axiales de la portion tubulaire extérieure 10.

L'élément amortisseur 6 se présente sous la forme d'une couronne en matière élastique de longueur axiale sensiblement identique à celle de la jante 5 et interposée radialement entre le moyeu 4 et la jante 5 en étant fixée d'une part à la surface extérieure cylindrique 11 du moyeu 4 et d'autre part à l'alésage 12 de la jante extérieure 5.

L'élément amortisseur 6 est réalisé en matériau élastique magnétisable, par exemple un mélange d'un matériau élastomère et de poudre de ferrite. Une partie d'extrémité axiale 19 de l'élément amortisseur 6, située du côté du carter 1, est magnétisée pour former un élément codeur 15 délimité par une zone grisée sur la figure 1. Tel que représenté, l'élément codeur 15 est formé par magnétisation d'une surface radiale frontale 6a de l'élément amortisseur 6. L'élément codeur 15 est ainsi disposé dans le prolongement axial de l'élément amortisseur 6 dont il fait partie intégrante en étant situé axialement dans l'espace compris entre le moyeu central 4 et la jante extérieure 5.

Un capteur 16 est fixé sur le carter 1 en regard de l'élément codeur 15. Le capteur 16 est situé dans le prolongement axial de l'élément amortisseur 6.

La poulie 3 peut être obtenue en disposant le moyeu 4 et la jante 5 relativement l'un à l'autre, puis en injectant et en vulcanisant le matériau élastique magnétisable entre le moyeu 4 et la jante 5. On effectue ensuite une opération de magnétisation de la partie formant élément codeur 15, par exemple en la soumettant à un champ magnétique.

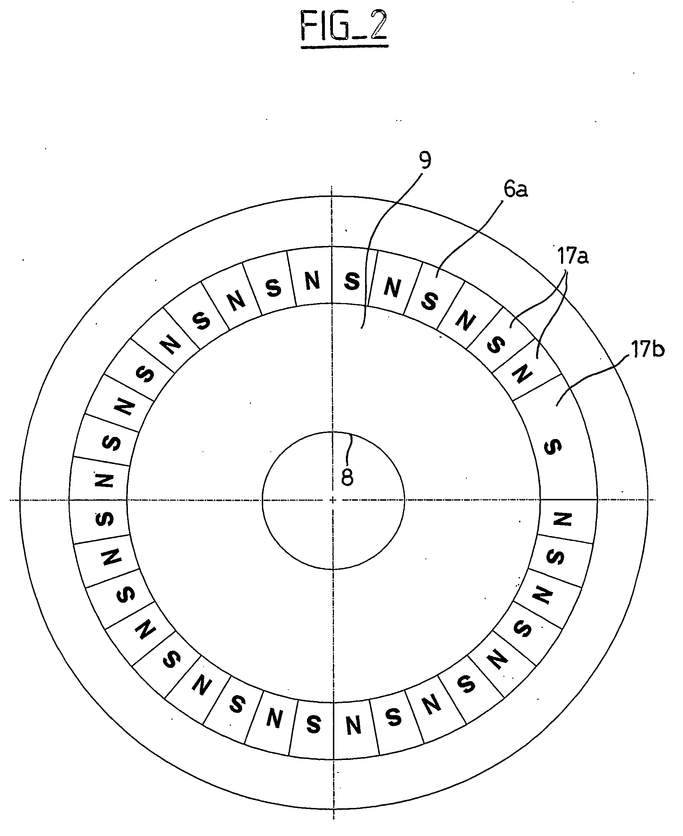

Comme on peut le voir sur la figure 2, la surface frontale 6a de l'élément amortisseur intermédiaire 6 est magnétisée de façon à former une zone active annulaire sous la forme d'un roue multipolaire avec une alternance de zones de polarités différentes 17a. Les zones présentent la même étendue circonférentielle, exceptée une zone plus étendue 17b qui sert de moyen d'indexation de la position angulaire de la poulie 3.

L'élément codeur 15 est ainsi formé sur une partie d'extrémité axiale 19 de l'élément amortisseur 16 et est d'un seul tenant (monobloc) avec ledit élément amortisseur 16.

On peut ainsi détecter à la fois la vitesse de rotation de la poulie et disposer d'un moyen d'indexation permettant de connaître la position angulaire de la poulie par rapport à une référence fixe.

Ceci est particulièrement avantageux dans le cas d'un moteur thermique à essence, car on peut ainsi détecter la position du vilebrequin correspondant au point mort haut d'un cylindre en vue du pilotage de l'électronique de l'allumage.

Une zone non magnétisée sur une portion angulaire limitée pourrait également servir d'index.

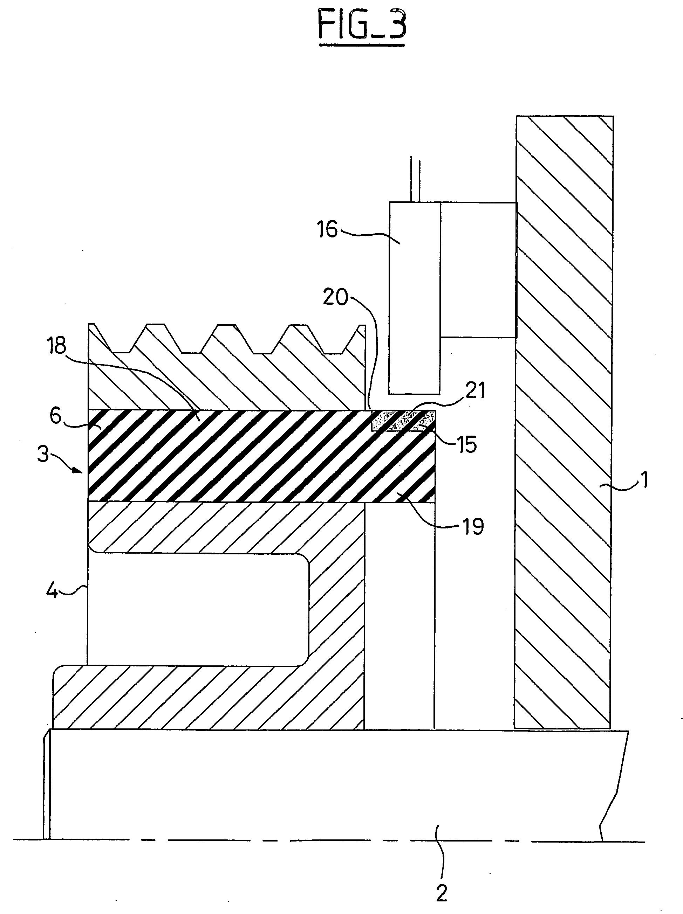

Sur la figure 3, où les références aux éléments semblables à ceux de la figure 1 ont été reprises, la poulie 3 diffère du mode de réalisation de la figure 1 en ce que l'élément amortisseur 6 est de longueur axiale supérieure à celle de la jante 5 et comporte une portion principale 18 qui est située entre le moyeu 4 et la jante 5, et une portion axiale d'extrémité 19 prolongeant axialement la portion principale 18 et venant en saillie axialement de l'espace compris entre la portion tubulaire extérieure 10 du moyeu 4 et la jante 5.

La portion axiale d'extrémité 19 présente une surface ou portée cylindrique extérieure 20, dont une portion 21, représentée grisée, est magnétisée afin de former l'élément codeur 15 sur la surface extérieure de la portion d'extrémité 19. Un capteur 16 est orienté radialement vers l'intérieur en étant disposé en regard de la portée cylindrique 20 extérieure de la portion axiale d'extrémité 19.

La portion axiale d'extrémité 19 située hors de l'espace compris entre le moyeu 4 et la jante 5 est moins déformée que la portion principale 18 par les contraintes de torsion ou radiales appliquées à l'élément amortisseur 6.

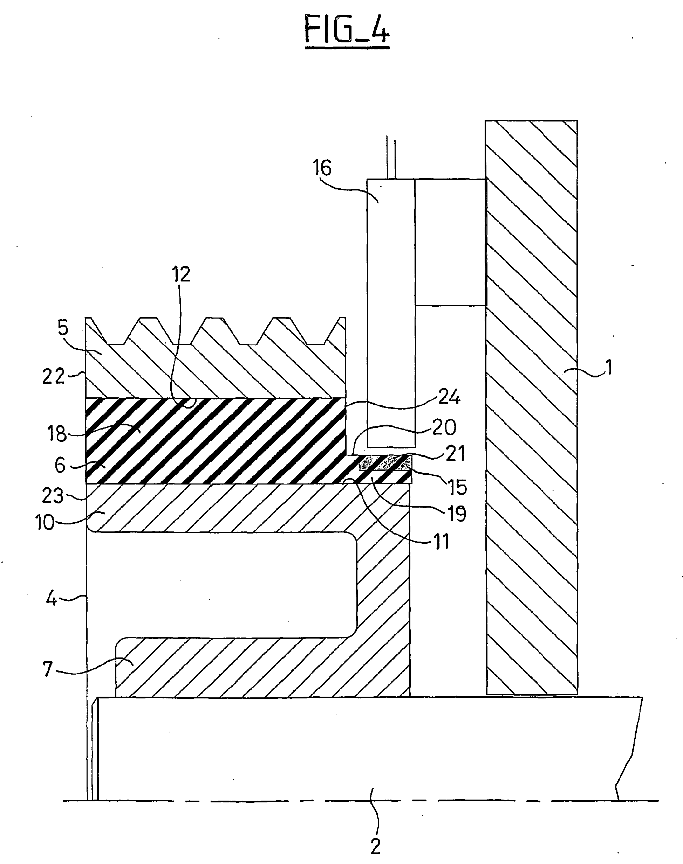

Sur la figure 4, où les références aux éléments semblables à ceux de la figure 3 ont été conservées, la portion extérieure 10 du moyeu central 4 est plus longue axialement que le manchon intérieur 7 ainsi que la jante 5, qui est disposée axialement de sorte que sa surface frontale 22 située du côté opposé au carter 1 se situe sensiblement dans le même plan que la surface frontale 23 de la portion extérieure 10 du manchon 4 orientée du côté opposé au carter 1.

L'élément amortisseur 6 présente une portion principale 18 située dans l'espace compris axialement et radialement entre l'alésage 12 de la jante extérieure 5 et la portion extérieure 10 située en regard de l'alésage 12, et une portion axiale d'extrémité 19 plus mince et s'étendant axialement à partir de la zone de moindre diamètre d'une surface frontale 24 de la portion principale 18 située du côté opposé aux surfaces frontales arrière 22, 23 de la jante 5 et de la portion extérieure 10 du moyeu 4. La portion axiale d'extrémité 19 est en contact avec la surface extérieure 11 de la portion extérieure 10 du moyeu 4.

La portion d'extrémité 19 présente une portée cylindrique extérieure 20 dont une partie 21 est magnétisée pour former élément codeur 15 du type couronne magnétique multipolaire. Un capteur 16 est disposé radialement en regard de la partie magnétisée 21, une extrémité sensible du capteur venant à proximité de la partie magnétisée 21.

Les contraintes de torsion et de compression radiales subies par l'élément amortisseur intermédiaire 6 seront principalement transmises par la portion principale 18. La portion axiale d'extrémité 19 plus mince et en saillie de l'espace situé entre le moyeu central 4 et la jante extérieure 5 de la poulie 3 subit des déformations moins importantes que la portion principale 18.

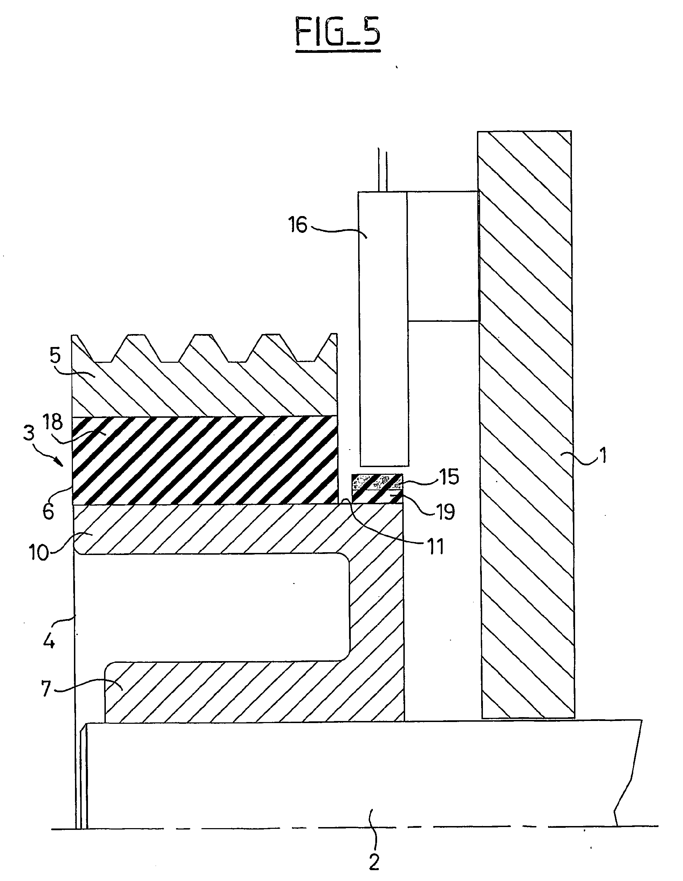

Sur la figure 5, la poulie 3 diffère du mode de réalisation de la figure 4 en ce qu'il existe une discontinuité de matière entre la portion principale 18 et la partie magnétisée formant élément codeur 15 de la portion axiale d'extrémité 19. En d'autres termes, l'élément codeur 15 est fixé sur la surface extérieure 11 du moyeu 4 en étant distant axialement de l'élément amortisseur 6 formé par la portion principale 18.

La poulie selon la figure 5 peut être obtenue à partir du mode de réalisation illustré sur la figure 4 par enlèvement de matière entre la portion principale 18 et la partie magnétisée formant élément codeur 15 de la portion axiale d'extrémité 19. Dans ce cas, l'élément codeur 15 et l'élément amortisseur 6 sont constitués du même matériau magnétisable de base, l'élément codeur 15 présentant au moins une surface ou partie qui est magnétisée.

On peut également prévoir d'obtenir la poulie de la figure 5 directement par des opérations séparées d'injection ou de surmoulage de l'élément codeur 15 et de l'élément amortisseur 6 sur la jante extérieure 5 et le moyeu 4. Dans ce cas, on pourra éventuellement prévoir des matériaux différents, avec une injection ou un surmoulage simultané ou différé, ou au contraire l'utilisation du même matériau élastique magnétisable.

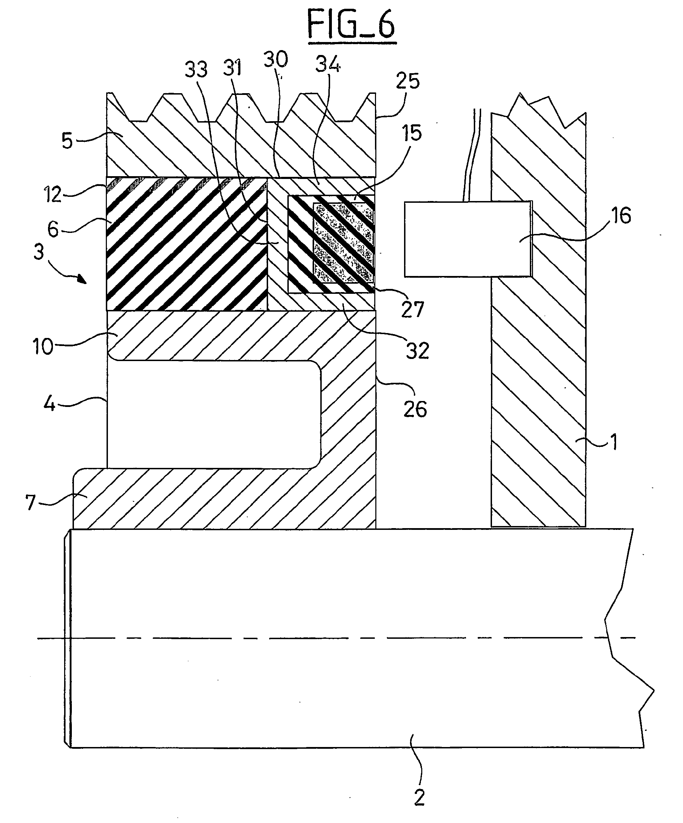

Sur la figure 6, où les références aux éléments semblables à ceux de la figure 1 ont été reprises, la poulie 3 diffère du mode de réalisation illustré par la figure 1 en ce qu'un support rigide 30 sépare une partie formant élément amortisseur 6 et une partie formant élément codeur 15.

Le support 30 se présente sous la forme d'une bague annulaire 31 présentant en section un profil en U avec une première portion axiale tubulaire 32 emmanchée sur la surface extérieure 11 du moyeu 4, une portion radiale 33 s'étendant vers l'extérieur à partir d'une extrémité de la portion axiale intérieure 32, et une seconde portion axiale tubulaire 34 s'étendant à partir de la zone de plus grand diamètre de la portion radiale 32 axialement du côté de la première portion axiale 32.

Le support 30 est orienté de façon que la cavité formée par son profil en U soit ouverte vers le carter 1, le support 30 étant emmanché sur le moyeu 4 de sorte que les extrémités libres des première et seconde portions axiales 32, 34 se situent sensiblement dans le plan de surfaces frontales 25, 26 du moyeu 4 et de la jante extérieure 5 orientées du côté du carter 1. Le support 30 est plus long axialement que la jante 5. La longueur du support 30 est ici approximativement égale à un tiers de la longueur de la jante 5.

Le support 30 ainsi disposé forme dans l'espace compris entre le moyeu 4 et l'alésage 12 de la jante 5 une séparation entre un premier logement ouvert du côté du carter 1 et limité par le support 30, et un second logement ouvert du côté opposé, et limité par la surface extérieure 10 du moyeu 4, la paroi radiale 33 du support 30, et l'alésage 12 de la jante 5.

Le support 30 présente des dimensions radiales telles que le support 30 est emmanché serré sur le moyeu 4 pour être solidaire angulairement du moyeu 4, et le support 30 est en contact glissant par la surface extérieure de sa seconde portion axiale 34 avec l'alésage 12 de la jante extérieure 5. Ainsi, le support 30 est solidaire angulairement du moyeu 4 et peut se déplacer angulairement relativement à la jante 5, afin de ne pas entraver un déplacement angulaire relatif entre la jante 5 et le moyeu 4.

L'élément amortisseur intermédiaire 6 est disposé dans le second logement, et l'élément codeur 15 est formé dans le premier logement. L'élément codeur 15 est obtenu par injection de matière magnétisable dans le premier logement formé par le support 30, une surface radiale frontale 27 située dans le plan des surfaces frontales 25, 26 de la jante 5 et du moyeu 4 étant magnétisée pour former une couronne magnétique multipolaire.

Pour la fabrication de la poulie 3, on peut prévoir de fixer le support 30 sur le moyeu 4, de positionner la jante 5 par rapport au moyeu 4 et au support 30, et d'injecter lors d'une même opération une matière magnétisable simultanément pour former l'élément codeur 15 et l'élément amortisseur intermédiaire 6, puis de magnétiser la surface frontale de l'élément codeur 15.

On peut également prévoir une injection pour former l'élément codeur 15 dans le support 30 avant sa fixation sur le moyeu 4.

On peut encore prévoir d'abord une fixation du support 30 sur le moyeu 4 et ensuite deux injections séparées, éventuellement avec des matières différentes.

Ce mode de réalisation permet une séparation et un découplage entre l'élément intermédiaire amortisseur 6 et l'élément codeur 15, de façon à éviter des déformations de l'élément codeur 15 pouvant altérer les mesures des paramètres de rotation de la poulie 3.

Bien entendu, l'invention n'est pas limitée aux modes de réalisation illustrés.

C'est ainsi que l'on pourrait éventuellement prévoir une jante munie de dents pour une transmission de couple, au lieu d'une jante adaptée pour coopérer avec une courroie de type « Polyvé ».

De même, la poulie pourrait être fixée à l'extrémité du vilebrequin par des moyens mécaniques autres que l'emmanchement, comme par exemple une fixation par boulonnage en bout d'arbre.

Grâce à l'invention, on obtient une poulie pouvant être utilisée directement avec un capteur pour former un dispositif de détection, notamment pour la détection de paramètres de rotation d'un vilebrequin. La poulie est compacte et peut être obtenue de façon simple avec un coût de fabrication faible.

## Revendications

1. Poulie comprenant un moyeu (4), une jante extérieure (5) et un élément amortisseur intermédiaire (6) disposé radialement entre le moyeu (4) et la jante (5), la poulie (3) comprenant un élément codeur (15) prévu pour coopérer avec un capteur, **caractérisé par le fait que** ledit élément codeur (15) est disposé sensiblement dans le prolongement axial de l'élément amortisseur intermédiaire (6), l'élement codeur étant constitué en matériau élastique magnétisable.

2. Poulie selon la revendication 1, **caractérisé par le fait que** l'élément codeur (15) est disposé à l'intérieur de l'espace compris entre la jante (5) et le moyeu (4).

3. Poulie selon la revendication 1, **caractérisé par le fait que** l'élément codeur (15) est disposé à l'extérieur de l'espace compris entre la jante (5) et le moyeu (4).

4. Poulie selon l'une quelconque des revendications précédentes, **caractérisé par le fait que** l'élément codeur (15) et l'élément amortisseur (6) sont constitués d'un même matériau magnétisable, l'élément codeur (15) étant obtenu par magnétisation dudit matériau.

5. Poulie selon l'une quelconque des revendications précédentes, **caractérisé par le fait que** l'élément codeur (15) est disposé sur le moyeu (4) à distance axiale de l'élément amortisseur (6).

6. Poulie selon l'une quelconque des revendications précédentes, **caractérisé par le fait qu'**elle comprend un support rigide (30) emmanché sur le moyeu (4) dans le prolongement de l'élément amortisseur (6), l'élément codeur (15) étant fixé sur le support (30).

7. Poulie selon l'une quelconque des revendications 1 à 4, **caractérisé par le fait que** l'élément codeur (15) est formé sur une partie (19) d'un seul tenant avec l'élément amortisseur (6).

8. Poulie selon la revendication 7, **caractérisé par le fait que** l'élément codeur (15) est formé sur une surface frontale (6a) de l'élément amortisseur (6).

9. Poulie selon l'une quelconque des revendications 7 ou 8, **caractérisé par le fait que** l'élément codeur (15) est formé sur une portée cylindrique (21) de l'élément amortisseur (6).

10. Poulie selon l'une quelconque des revendications 7 à 9, **caractérisé par le fait que** l'élément amortisseur (6) comprend une portion principale (18) interposée entre la jante (5) et le moyeu (4), ladite portion principale (18) étant prolongée à une extrémité par une portion axiale annulaire (19) faisant saillie de l'espace compris radialement entre le moyeu (4) et la jante (5), ladite portion axiale annulaire présentant au moins une partie formant élément codeur (15).

11. Poulie selon la revendication 10, **caractérisé par le fait que** la portion axiale annulaire (19) est plus mince que la portion principale (18).

12. Dispositif de détection comprenant un capteur (16) et une poulie (3) selon l'une quelconque des revendications précédentes.

13. Moteur à combustion interne comprenant un capteur (16) et une poulie (30) selon l'une quelconque des revendications 1 à 11, la poulie étant disposée sur le vilebrequin (2) du moteur.

## Claims

1. Pulley comprising a hub (4), an outer rim (5) and an intermediate damping element (6) positioned radially between the hub (4) and the rim (5), the pulley (3) comprising an encoder element (15) designed to collaborate with a sensor, **characterized in that** the said encoder element (15) is positioned more or less in the axial continuation of the intermediate damping element (6), the encoder element being made of a magnetizable elastic material.

2. Pulley according to Claim 1, **characterized in that** the encoder element (15) is positioned inside the space between the rim (5) and the hub (4).

3. Pulley according to Claim 1, **characterized in that** the encoder element (15) is positioned outside the space between the rim (5) and the hub (4).

4. Pulley according to any one of the preceding claims, **characterized in that** the encoder element (15) and the damping element (6) are made of one and the same magnetic material, the encoder element (15) being obtained by magnetizing the said material.

5. Pulley according to any one of the preceding claims, **characterized in that** the encoder element (15) is positioned on the hub (4) at an axial distance from the damping element (6).

6. Pulley according to any one of the preceding claims, **characterized in that** it comprises a rigid support (30) pushed onto the hub (4) in the continuation of the damping element (6), the encoder element (15) being fixed to the support (30).

7. Pulley according to any one of Claims 1 to 4, **characterized in that** the encoder element (15) is formed on a part (19) that is integral with the damping element (6).

8. Pulley according to Claim 7, **characterized in that** the encoder element (15) is formed on a frontal surface (6a) of the damping element (6).

9. Pulley according to either one of Claims 7 and 8, **characterized in that** the encoder element (15) is formed on a cylindrical bearing surface (21) of the damping element (6).

10. Pulley according to any one of Claims 7 to 9, **characterized in that** the damping element (6) comprises a main portion (18) inserted between the rim (5) and the hub (4), the said main portion (18) being extended at one end by an annular axial portion (19) projecting from the space that lies radially between the hub (4) and the rim (5), the said annular axial portion exhibiting at least a part that forms an encoder element (15).

11. Pulley according to Claim 10, **characterized in that** the annular axial portion (19) is thinner than the main portion (18).

12. Detection device comprising a sensor (16) and a pulley (3) according to any one of the preceding claims.

13. Internal combustion engine comprising a sensor (16) and a pulley (30) according to any one of Claims 1 to 11, the pulley being positioned on the crankshaft (2) of the engine.

## Patentansprüche

1. Riemenscheibe mit einer Nabe (4), einem Außenring (5) und einem dazwischen eingefügten Dämpferelement (6), das in radialer Richtung zwischen der Nabe (4) und dem Außenring (5) angeordnet ist, wobei die Riemenscheibe (3) ein Impulsgeberelement (15) aufweist, das dazu eingerichtet ist, mit einem Aufnehmer zusammenzuwirken, **dadurch gekennzeichnet, dass** das Impulsgeberelement (15) im Wesentlichen in der axialen Verlängerung des eingefügten Dämpferelements (6) angeordnet ist, wobei das Impulsgeberelement aus einem magnetisierbaren elastischen Material hergestellt ist.

2. Riemenscheibe nach Anspruch 1, **dadurch gekennzeichnet, dass** das Impulsgeberelement (15) innerhalb des zwischen dem Außenring (5) und der Nabe (4) vorhandenen Raums angeordnet ist.

3. Riemenscheibe nach Anspruch 1, **dadurch gekennzeichnet, dass** das Impulsgeberelement (15) außerhalb des zwischen dem Außenring (5) und der Nabe (4) vorhandenen Raums angeordnet ist.

4. Riemenscheibe nach einem der vorhergehenden Ansprüche, **dadurch gekennzeichnet, dass** das Impulsgeberelement (15) und das Dämpferelement(6) aus demselben magnetisierbaren Material hergestellt sind, wobei das Impulserzeugerelement (15) durch Magnetisierung des Materials hergestellt ist.

5. Riemenscheibe nach einem der vorhergehenden Ansprüche, **dadurch gekennzeichnet, dass** das Impulsgeberelement (15) auf der Nabe (4) in axialem Abstand von dem Dämpferelement (6) angeordnet ist.

6. Riemenscheibe nach einem der vorhergehenden Ansprüche, **dadurch gekennzeichnet, dass** sie einen starren Träger (30) aufweist, der in der Verlängerung des Dämpferelement (6) auf der Nabe (4) befestigt ist, wobei das Impulsgeberelement (15) auf dem Träger (30) befestigt ist.

7. Riemenscheibe nach einem der Ansprüche 1 bis 4, **dadurch gekennzeichnet, dass** das Impulsgeberelement (15) auf einem Abschnitt (19) ausgebildet ist, der zusammen mit dem Dämpferelement (6) einstückig hergestellt ist.

8. Riemenscheibe nach Anspruch 7, **dadurch gekennzeichnet, dass** das Impulsgeberelement (15) auf einer Stirnseite (6a) des Dämpferelements (6) ausgebildet ist.

9. Riemenscheibe nach einem der Ansprüche 7 oder 8, **dadurch gekennzeichnet, dass** das Impulsgeberelement (15) auf einem zylindrischen Sitz (21) des Dämpferelement (6) ausgebildet ist.

10. Riemenscheibe nach einem der Ansprüche 7 bis 9, **dadurch gekennzeichnet, dass** das Dämpferelement(6) einen Hauptabschnitt (18) aufweist, der zwischen dem Außenring (5) und der Nabe (4) angeordnet ist, wobei der Hauptabschnitt (18) an einem Ende durch einen ringförmigen axialen Abschnitt (19) verlängert ist, der gegenüber dem zwischen der Nabe (4) und dem Außenring (5) vorhandenen Raum radial vorspringt, wobei der ringförmige axiale Abschnitt wenigstens einen Abschnitt aufweist, der ein Impulsgeberelement (15) bildet.

11. Riemenscheibe nach Anspruch 10, **dadurch gekennzeichnet, dass** der ringförmige axiale Abschnitt (19) dünner als der Hauptabschnitt (18) ist.

12. Erfassungseinrichtung mit einem Aufnehmer (16) und einer Riemenscheibe (3) nach einem der vorhergehenden Ansprüche.

13. Verbrennungsmotor mit einem Aufnehmer (16) und einer Riemenscheibe (30) nach einem der Ansprüche 1 bis 11, wobei die Riemenscheibe auf der Kurbelwelle (2) des Motors angeordnet ist.
